# EUROPEAN PATENT APPLICATION

(11) **EP 1 469 338 A1**
(43) Date of publication of application: **20.10.2004**
(21) Application number: 04008342.0
(22) Date of filing: 06.04.2004
(51) Int. Cl.: G02C 5/22

(54) **Hinge for eyeglass arms**

(30) Priority: 16.04.2003 IT MI20030187
(71) Applicant: Zancolo', Massimo, 32040 Vigo Di Cadore (BL) (IT)
(72) Inventor: Zancolo', Massimo, 32040 Vigo Di Cadore (BL) (IT)
(74) Representative: Ferraiolo, Rossana

(57) **Abstract**

A chamber (2) integral with the frame of eyeglasses in which there rotates the hinged end of the eyeglass arm (3) comprises at least one first flexure element (4) interposed between said end of the arm (3) and a walls of said chamber to control the rotation and the positioning of said arm.

## Description

The present invention relates to a hinge for eyeglass arms, in particular an elastic hinge to facilitate a better fit for the eyeglasses when worn, the positioning, gradual opening and closing of the arms.

In the remainder of the description this hinge will be referred to more simply only as elastic hinge.

Each of the arms of the glasses normally has one of its ends hinged elastically to an usually curved linkage element between the arm and the lens-holder rim. In the remainder of the description the linkage element between the arm and the lens-holder rim will be referred to more simply only as linkage element and the lens-holder rim will be called frame.

Known from prior art are eyeglass frames that have different elastic hinges, though in general make use of compressed helical springs and torsion springs. In the most widely used solutions the helical spring is inserted in an appropriate dead hole previously made along the horizontal axis of each arm or the linkage element in order to push a metallic cylinder, ball or cursor against a cam of the hinge and thus block the arm in an open or a closed position. Thanks to the elasticity of the hinges, said arms tend to close when they are in the open position, thereby improving the fit of the worn glasses. The force that these means exert on the cam depends on the size of the spring.

Other known elastic hinges utilize substantially the same means described above, but in this case the helical spring, the cylinder, the ball or the cursor are contained in suitable seatings fixed onto the internal surface of the arm and the linkage element.

The principal disadvantage of the known elastic hinges is constituted by the fact that the use of helical and torsion springs, irrespective of whether they are associated directly with the arms or inserted into containers fixed onto the outside of the arms, impose minimum dimensions and constructional characteristics that do not permit the designer to improve the aesthetic appearance of the frames.

The elastic hinge for arms that is the object of the present invention obviates the aforesaid disadvantage. This hinge carries elastic means that control the rotation of the arm and, as characterized in the claims, comprises a chamber integral with the eyeglass frame and an end of a arm hinged therein and at least a first flexure element, the end of the arm and the flexure element being positioned with respect to each other in such a way as to control the rotation of the arm between an open and a closed position and its being held in said positions.

End of the arm is intended to refer to any portion of the arm comprised in said chamber, the term being understood to refer to either of the two parts adjacent to the centre of rotation.

The principal advantage of the elastic hinge constituting the object of the present invention derives from the fact that the flexure element makes it possible to reduce the dimensions of the hinge and to associate the hinge also directly with the frame without the interposition of a linkage element. All this makes it possible to improve the aesthetics of the eyeglass frames.

The elastic hinge in accordance with the present invention will now be described in greater detail, the description making reference to the drawings, which illustrate only some particular embodiments, where
Figure 1 shows a first plan view drawn partly as a section,
Figure 2 shows a second plan view drawn partly as a section,
Figure 3 shows a third plan view drawn partly as a section,
Figure 4 shows a first plan view,
Figure 5 shows a first front elevation drawn partly as a section,
Figure 6 shows a second plan view
Figure 7 shows a second front elevation drawn partly as a section,
Figure 8 shows a first perspective view,
Figure 9 shows a third front elevation drawn partly as a section,
Figure 10 shows a fourth plan view drawn partly as a section, and
Figure 11 shows a first exploded perspective view.

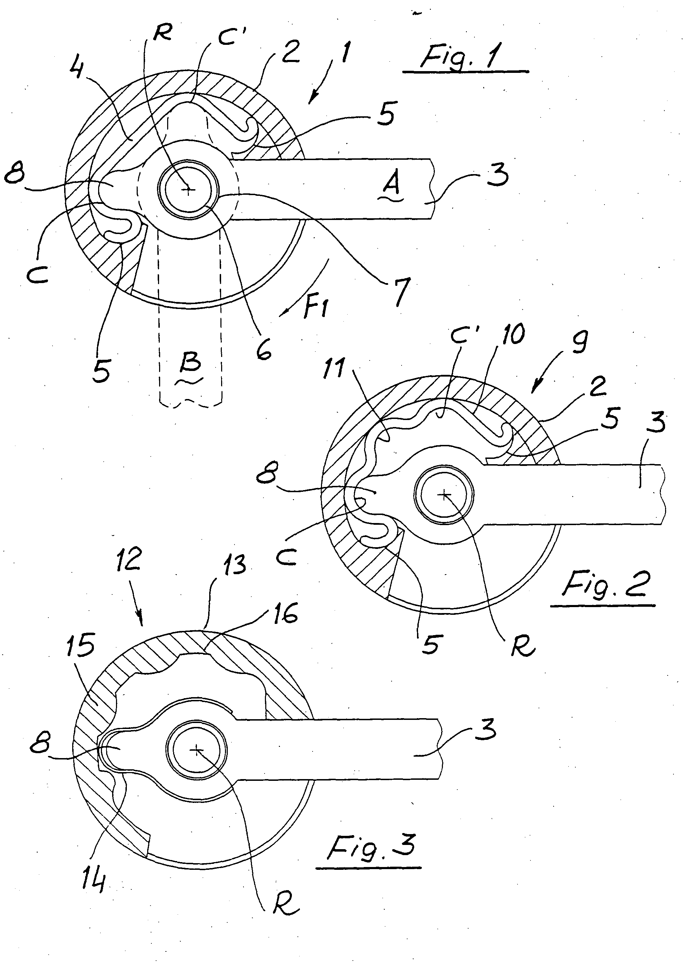

Figure 1 shows in a schematic manner an elastic hinge 1 for eyeglass arms. The hinge comprises a cylindrical chamber 2 that may be fixed to the linkage element or the front or also obtained as a single piece with said parts, none of which are shown in the figure. It further comprises an arm 3, shown in part, a flexure element in form of a lateral leaf spring 4, seatings 5 for containing the ends of said spring 4 and a holed and threaded cylinder 6. The arm 3 has a hole 7 for being fitted onto said cylinder 6 in order to be able to rotate in the directions of the arrow F1 around a centre of rotation R from an open position "A" to a closed position "B" and vice versa. Said arm is also provided with an extension 8 suitable for being received in the two opposite concave seatings C and C' of the spring 4 and to remain blocked there in said closed or open position. The rotation of the arm can take place only if an appropriate force is exerted to overcome the resistance of the extension of the arm held in said concave seatings C and C'.

The arm and the spring are retained inside the chamber 2 by a cover (not shown in the figure) screwed into the cylinder 6.

Equal parts in successive figures are always indicated by the same reference numbers and some parts already described in Figure 1 have not been numbered to avoid complicating the drawings.

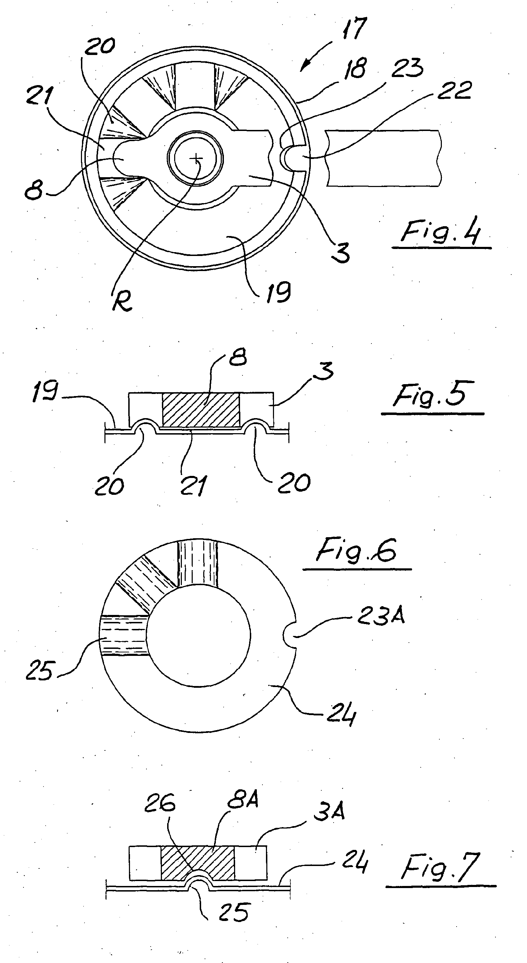

Figure 2 illustrates in a schematic manner an elastic hinge 9 in which, inserted in the same cylindrical chamber 2 of Figure 1, there is a lateral leaf spring 10 having a shape different from the spring of Figure 1, its two ends being received in said seatings 5. Said spring 10 comprises a concave seating 11 between said opposite concave seatings C, C', all suitable for receiving the extension 8 of the arm 3 and blocking it in an open position, a closed position and an intermediate position corresponding to said seatings. The rotation of the arm around the centre of rotation R can take place only when an appropriate force is exerted to overcome the resistance of the arm extension against the spring 10.

Figure 3 illustrates in a schematic manner an elastic hinge 12 for eyeglass arms that comprises a cylindrical chamber 13, a lateral leaf spring 14 inserted and retained on the extension 8, a retention element 15 provided with concave seatings 16 to receive the spring 14 during the rotation of the arm 3. The arm is blocked in an open position, a closed position and an intermediate position coinciding with said seatings 16 and its rotation around the centre of rotation R can take place only when an appropriate force is exerted to overcome the resistance of the spring against the walls of the concave seatings.

Figure 4 illustrates in a schematic manner an elastic hinge 17 for eyeglass arms that comprises a cylindrical chamber 18, a flexure element in the form of a transverse leaf spring 19 in the form of a circular crown engaged on the bottom of the chamber, which is provided with undulations 20 that form seatings 21 to receive the extension 8 of the end of the arm 3. The arm, which can rotate about the centre of rotation R, is blocked in open position, a closed position and an intermediate position that coincide with the seatings 21. A projecting element 22 of the chamber 18 engages with a seating 23 of the spring 19 to avoid undesired rotations of the spring.

Figure 5 is a detail of the elastic hinge of Figure 4 and shows that the extension 8 of the arm 3 is engaged in the seating 21 of the spring 19 to remain blocked there. The figure makes it clear that the arm 3 can be made to rotate only by applying an appropriate force sufficient to overcome the resistance of the undulations 20.

It will be understood that, in the solution illustrated by Figures 4 and 5, the arm need not be provided with an extension 8 and in that case the seatings 21, appropriately repositioned and redimensioned, should be capable of receiving the portion of the end of the arm comprised between the cylinder 6 and the perimeter of said chamber.

Figure 6 shows a transverse leaf spring 24 in the form of a circular crown different from the one illustrated by the two previous figures. This spring 24 is provided with appropriately spaced undulations 25 and by means of its seating 23A can be engaged on the bottom of the cylindrical chamber of Figure 4 by means of the corresponding projecting element 22 shown in Figure 4.

The detail of Figure 7 shows how the arm 3A engages with the spring 24. The undulation 25 of said spring engages with the concave seating 26 provided on the bottom surface of the extension 8A of the arm 3A to block the latter in position and the arm 3A can be made to rotate only by applying an appropriate force sufficient to overcome the resistance of the undulations 25.

It will be understood that, in the solution illustrated by Figures 6 and 7, the arm 3A need not be provided with the extension 8 and in that case the concave seating 26 will be provided on the bottom surface of the portion of the end of the arm comprised between the cylinder 6 and the perimeter of said chamber.

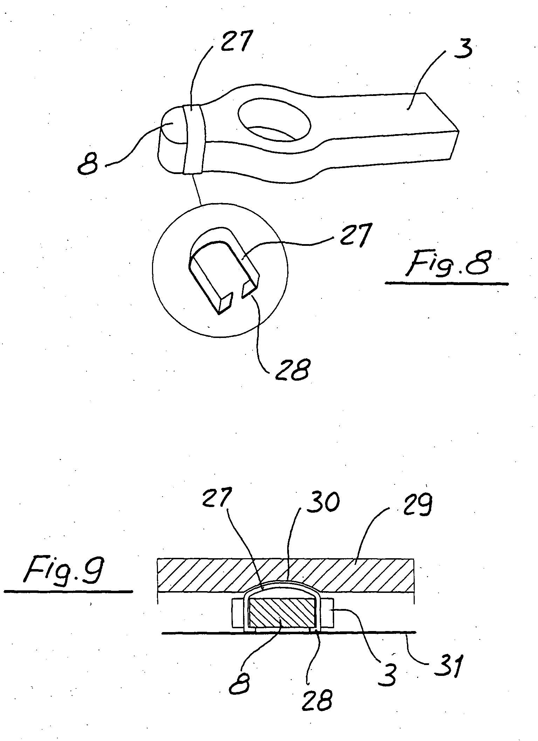

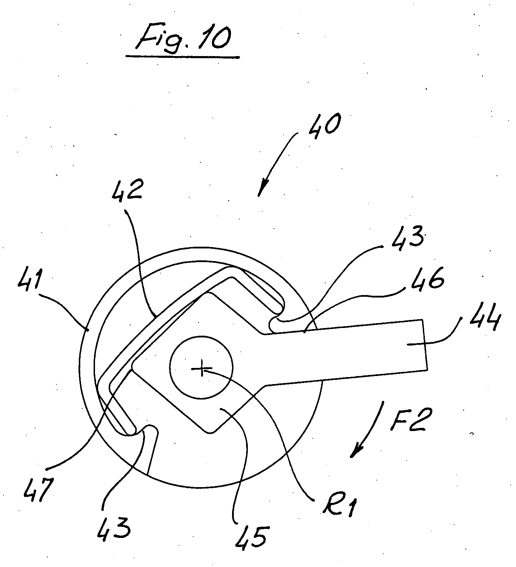

Figure 8 shows a leaf spring 27 associated with the extension 8 of the arm of Figures 1 to 5 and retained there by the fins 28. The spring 27 can once again be defmed as a transverse spring and the manner in which it functions will be explained by reference to Figure 9.

Figure 9 shows the arm 3 with the transverse spring inserted on its extension 8, the cover 29 of the cylindrical chamber, which is not shown in the figure, is provided with a concave seating 30 to receive the transverse spring 27 and keep the arm 3 blocked in position. It will be understood that, depending on the number of the concave seatings 30, the arm can be blocked in a plurality of positions, including the open and the closed position. Undesired vertical movements of the transverse spring 27 are prevented by the fins 28 of the spring, which are retained between the arm 3 and the bottom 31 of said cylindrical chamber (not shown in the figure). From the figure it will be understood that the arm 3 can be made to rotate only by applying an appropriate force sufficient to overcome the resistance of the spring 27.

It will be understood that, in the solution illustrated by Figures 8 and 9, the arm 3 need not be provided with an extension and in that case the transverse spring 27 will be positioned on the portion of the end of the arm comprised between the cylinder 6 and the perimeter of said chamber and the concave seatings will have to be appropriately positioned.

Figure 10 illustrates in a schematic manner an elastic hinge 40 in which, within a chamber wholly similar to the one shown in Figures 1 and 2, there is inserted a lateral leaf spring 42, the ends of the spring being received in the seatings 43, and in which the end 45, within the chamber, of the arm 44 is substantially square shape. The figure shows the arm in the closed position, where it is kept blocked by the wall 46 of the seating 43. The arm can be made rotate around the centre of rotation R1 in the direction of the arrow F2 only by applying an appropriate force capable of overcoming the resistance of the vertex 47 of the end of the arm against said leaf spring 42. Lastly, though this is not brought out by the figure 10, the centre of rotation R1 of the arm 44 is displaced from the centre of the cylindrical chamber in the direction opposite to the side on which the spring is arranged, this in order to diminish the pressure of the end of the arm on said spring. It will be appreciated, however, that in this solution the centre of rotation of the arm 44 could be displaced, also, in opposite position in respect of the above or could coincide with the centre of the cylindrical chamber.

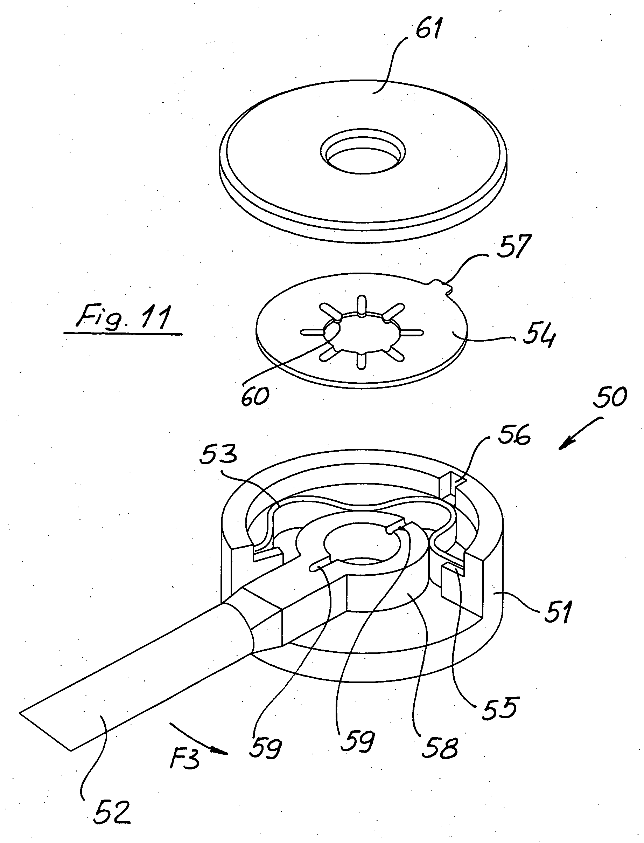

Figure 11 shows an elastic hinge 50 for eyeglass arms that comprises a cylindrical chamber 51. It also comprises an arm 52, shown only in part, a first and a second flexure element, respectively in the form of a lateral leaf spring 53 and a transverse Belleville washer 54 engaged in the upper part of the chamber 51, seatings 55 for containing the ends of said lateral leaf spring 53. The chamber comprises a seating 56 to receive an extension 57 of said Belleville washer in such a manner as to avoid possible undesired rotations of said spring when it is inserted inside the chamber. The figure further shows that the end 58 of the arm 52 inside the chamber is provided with cavities 59 to receive the corresponding upstands 60 of the Belleville washer 54. The arm 52, the spring 53 and the spring 54 are retained within the chamber by the cover 61, which, by means of a screw not shown in the figure, is screwed into a holed and threaded cylinder at the bottom of the chamber that is likewise not shown in the figure.

In an alternative to this solution, the upstands may be provided on the end 58 of the arm 52 in place of the concavities, while the concavities are provided on the spring 54 in place of the upstands.

The arm may be rotated in the direction of the arrow F3 only by applying an appropriate force capable of overcoming the resistance of the end 58 of the arm 52 against the spring 53 and the upstands 60 of the Belleville washer 54.

The hinge may at the same time comprise also any one of the lateral springs and any one of the transverse springs.

The transverse springs may be advantageously engaged with the top or the bottom of the end of the arm and, as an alternative, the spring 27 of Figure 8 may have its convexity oriented towards the bottom of the chamber.

It will further be appreciated that, even in the solutions shown in Figures 1 to 9 and in Figure 11, the centre of rotation may be advantageously displaced from the centre of the chamber in order to diminish or increase the pressure of the end of the arm on the springs 4, 10, 14 and 53 and the pressure of the spring 14 of Figure 3 on the walls of the concave seatings. The displacement of the centre of rotation may be of the order of between 0 and 1 mm.

## Claims

1. A hinge (1, 9, 12, 17, 40, 50) for eyeglass arms the rotation of which is controlled by elastic means, **characterized in that** the hinge comprises a chamber (2, 13, 18, 41, 51) integral with the eyeglass frame, an end of a arm (3, 3A, 44, 52) hinged therein and at least one first elastic means in the form of a flexure element (4, 10, 14, 19, 24, 27, 42, 53, 54), the end of the arm and the flexure element being reciprocally positioned and in contact with each other in such a manner as to control the rotation of the arm between an open position and a closed position and to retain it in said positions.

2. A hinge (1, 9, 12, 17, 40, 50) for eyeglass arms in accordance with Claim 1, **characterized in that** the centre of rotation of said end of the arm (3, 3A, 44, 52) hinged within the chamber coincides with the centre of the chamber.

3. A hinge (1, 9, 12, 17, 40, 50) for eyeglass arms in accordance with Claim 1, **characterized in that** the centre of rotation of said end of the arm (3, 3A, 44, 52) is displaced from the centre of the chamber in order to increase or diminish the pressure of said end on said flexure element.

4. A hinge (1) for eyeglass arms in accordance with Claims 1 to 3, **characterized in that** said flexure element is a lateral leaf spring (4) retained along the lateral wall of the chamber by appropriate seatings (5) of the chamber and that said spring comprises two concave seatings (C, C') set at a certain distance apart to alternately receive an extension (8) of the arm (3) and block the latter, respectively, in an open and a closed position (A, B).

5. A hinge (9) for eyeglass arms in accordance with Claims 1 to 4, **characterized in that** said flexure element is a lateral leaf spring (10) that comprises at least one concave seating (11) between said two opposite concave seatings (C, C') to block the arm in an intermediate position.

6. A hinge (12) for eyeglass arms in accordance with Claims 1 to 3, **characterized in that** said flexure element is a lateral leaf spring (14) integrally attached to the extension (8) of the arm (3) and that said chamber comprises a plurality of concave seatings (16) on the lateral wall, each capable of receiving said extension (8) with the spring (14).

7. A hinge (17) for eyeglass arms in accordance with Claims 1 to 3, **characterized in that** said flexure element is a transverse leaf spring (19) in the form of a circular crown engaged within the chamber (18) with either the top or the bottom of the end of the arm, which spring (19) comprises a plurality of undulations (20) that form seatings (21) to receive the end of the arm.

8. A hinge for eyeglass arms in accordance with Claims 1 to 3, **characterized in that** said flexure element is a transverse leaf spring (24) in the form of a circular crown engaged within the chamber (18) with either the top or the bottom of the end of the arm, which spring (24) comprises a plurality of undulations (25), and that the end of the arm (3A) comprises a concave seating (26) to receive said undulations.

9. A hinge for eyeglass arms in accordance with Claims 1 to 3, **characterized in that** the end of the arm (3, 3A) comprises a flexure element in the form of a transverse leaf spring (27) oriented either towards the upper or the lower wall of the chamber, these walls being provided with a plurality of concave seatings (30) to receive said flexure element (27).

10. A hinge (50) for eyeglass arms in accordance with Claims 1 to 3, **characterized in that** it comprises both a lateral spring (53) and a transverse spring (54).
